# EUROPÄISCHE PATENTSCHRIFT

(11) **EP 1 201 507 B1**
(45) Veröffentlichungstag und Bekanntmachung des Hinweises auf die Patenterteilung: **22.02.2006**
(21) Anmeldenummer: 01120832.9
(22) Anmeldetag: 30.08.2001
(51) Int. Cl.: B60R 21/06

(54) **Sicherheitsnetz zur lösbaren Anbringung in einem Fahrzeug**
Removably mounted safety net for vehicle
Filet de sécurité démontable pour véhicule

(30) Priorität: 31.10.2000 DE 10054079
(43) Veröffentlichungstag der Anmeldung: 02.05.2002
(73) Patentinhaber: BOS GmbH & Co. KG, 73760 Ostfildern (DE)
(72) Erfinder: Sitzler, Wolfgang, Dipl.-Ing., 42111 Wuppertal (DE); Unger, Klaus, Dipl.-Ing., 08359 Breitenbrunn (DE)
(74) Vertreter: Patentanwälte Ruff, Wilhelm, Beier, Dauster & Partner

(56) Entgegenhaltungen:
- DE-A- 3 909 397
- DE-A- 4 010 209
- DE-A- 4 128 701
- DE-A- 19 540 934
- FR-A- 2 741 019
- US-A- 5 288 122

## Beschreibung

Die Erfindung betrifft ein Sicherheitsnetz zur lösbaren Anbringung in einem Fahrzeug gemäß dem Oberbegriff des Anspruches 1.

Derartige Sicherheitsnetze weisen eine obere und eine untere Haltestange auf, die in der Regel in fahrzeugseitig vorgesehenen Befestigungsöffnungen einhängbar sind. Bei Bedarf kann ein solches Sicherheitsnetz aufgebaut bzw. aufgespannt werden, um eine Abtrennung beispielsweise zwischen einem Laderaum und einem Fahrgastraum zu erreichen, und um zu verhindern, daß Gegenstände beispielsweise während eines Unfalls oder sonstiger starker Beschleunigungen aus dem Laderaum in den Fahrgastraum geschleudert werden.

Die beiden Haltestangen sind regelmäßig etwa so lang wie das Fahrzeug breit ist und nehmen für den Fall, daß das Sicherheitsnetz nicht aufgebaut ist, sondern im Fahrzeugraum gelagert werden soll, verhältnismäßig viel Platz in Anspruch. Daher ist es bereits bekannt, die Haltestangen faltbar, d.h. zusammenklappbar auszubilden.

Bei einer druckschriftlich nicht belegbaren klappbaren Haltestange besteht die Gelenkverbindung aus zwei Gelenkscheiben, die jeweils zwei Bohrungen enthalten. In zusammengeklappter Position sowie in auseinander geklappter Position kommen jeweils zwei unterschiedliche Bohrungen miteinander in Flucht. In beiden Positionen können die Haltestangen arretiert werden, wobei Riegelelemente, die beiden Gelenkscheiben axial, also im wesentlichen parallel zur Schwenkachse durchgreifen. Jedes Riegelelement ist federbelastet und weist darüber hinaus ein Gegenriegelelement auf, welches ebenfalls federbelastet ist. Die bekannte Anordnung ist auf Grund der Vielzahl der Einzelteile somit verhältnismäßig kompliziert ausgebildet.

Ausgehend von diesem Stand der Technik liegt der Erfindung die Aufgabe zugrunde, ein Sicherheitsnetz gemäß dem Oberbegriff des Anspruches 1 derart weiterzubilden, daß es einfacher aufgebaut ist.

Die Erfindung löst diese Aufgabe mit den Merkmalen des Anspruches 1, insbesondere denen des Kennzeichenteils, und ist demgemäß dadurch gekennzeichnet, daß ein peripher in wenigstens einem der beiden verschwenkbaren Teile eingreifendes Riegelelement zur Arritierung der verschwenkbaren Teile relativ zueinander vorgesehen ist.

Das Prinzip der Erfindung besteht somit im wesentlichen darin, statt einem die beiden Gelenkscheiben axial, d.h. parallel zur Schwenkachse durchgreifenden Riegelelement nunmehr ein Riegelelement vorzusehen, welches peripher, also am Rand der zu der Gelenkverbindung beitragenden beiden Teile, angreift. Diese Anordnung ermöglicht eine besonders einfache wie auch besonders sichere Ausbildung des erfindungsgemäßen Sicherheitsnetzes mit weniger Einzelteilen.

Außerdem ermöglicht die erfindungsgemäße Ausbildung eine vereinfachte Anordnung eines Betätigungsabschnittes zur manuellen Betätigung des Riegelelementes wie auch eine vereinfachte Anordnung eines Federelementes zur Rückstellung des Riegelelementes.

Gemäß einer vorteilhaften Ausführungform der Erfindung greift das Riegelelement in Randausnehmungen der verschwenkbaren Teile ein. Diese Ausführungsform bietet den Vorteil, daß auf besonders einfache Weise an den beiden Teilen Rastpositionen dadurch erreicht werden können, daß Randausnehmungen vorgenommen werden. Dies ermöglicht eine besonders einfache Ausgestaltung eines Riegelelementes sowie eine besonders einfache Anbringung der Randausnehmungen.

Gemäß einer weiteren vorteilhaften Ausgestaltung der Erfindung greift bei in ausgefalteter Position befindlicher Haltestange das Riegelelement in zwei fluchtende Randausnehmungen der beiden verschwenkbaren Teile ein. Diese Anordnung bietet den Vorteil, daß das Riegelelement besonders einfach ausgestaltet sein kann, um mit einem einzigen Verriegelungsabschnitt zugleich in zwei unterschiedlichen Randausnehmungen der beiden unterschiedlichen Teile zu liegen und auf diese Weise die Haltestange in ihrer auseinandergefalteten Position zu sichern.

Gemäß einer weiteren besonders vorteilhaften Ausgestaltung der Erfindung greift das Riegelelement radial in Ausnehmungen an einem der beiden verschwenkbaren Teile ein. Diese Ausführung bietet den Vorteil, daß nunmehr das Riegelelement nicht mehr, wie beim Stand der Technik, axial, d.h. im wesentlichen parallel zur Schwenkachse der Gelenkverbindung verlagert werden kann, sondern daß nunmehr eine Verlagerung des Riegelelementes entlang einer Geraden möglich ist, die im wesentlichen senkrecht zu der Schwenkachse der beiden Teile steht. Diese Anordnung ermöglicht eine besonders einfache Anbringung eines Federelementes sowie eine besonders einfache Montage und Konstruktion des Riegelelementes.

Gemäß einer weiteren vorteilhaften Ausgestaltung der Erfindung ist das Riegelelement Bestandteil eines radial verschiebbaren Körpers. Dies ermöglicht eine besonders einfache Anbringung des Riegelelements an der Gelenkverbindung.

Gemäß einer weiteren vorteilhaften Ausgestaltung der Erfindung weist der radial verschiebbare Körper einen Betätigungsabschnitt zur manuellen Betätigung auf. Dies ermöglicht, besonders einfache, im Prinzip auch beliebig groß wählbare Betätigungsflächen für die manuelle Betätigung durch einen Benutzer bereitzustellen.

Weitere Vorteile ergeben sich aus den nicht zitierten Unteransprüchen sowie an Hand der nachfolgenden Beschreibung eines in den Figuren dargestellten Ausführungsbeispiels. In den Figuren zeigen:
Fig. 1 in teilgeschnittener Ansicht eine Haltestange eines erfindungsgemäßen Sicherheitsnetzes im Bereich ihrer Gelenkverbindung in auseinandergefalteter Position,
Fig. 2 die Haltestange gemäß Fig. 1 in zusammengefalteter Position, und
Fig. 3 schematisch einen Schnitt entlang der Schnittlinie III-III in Fig. 1.

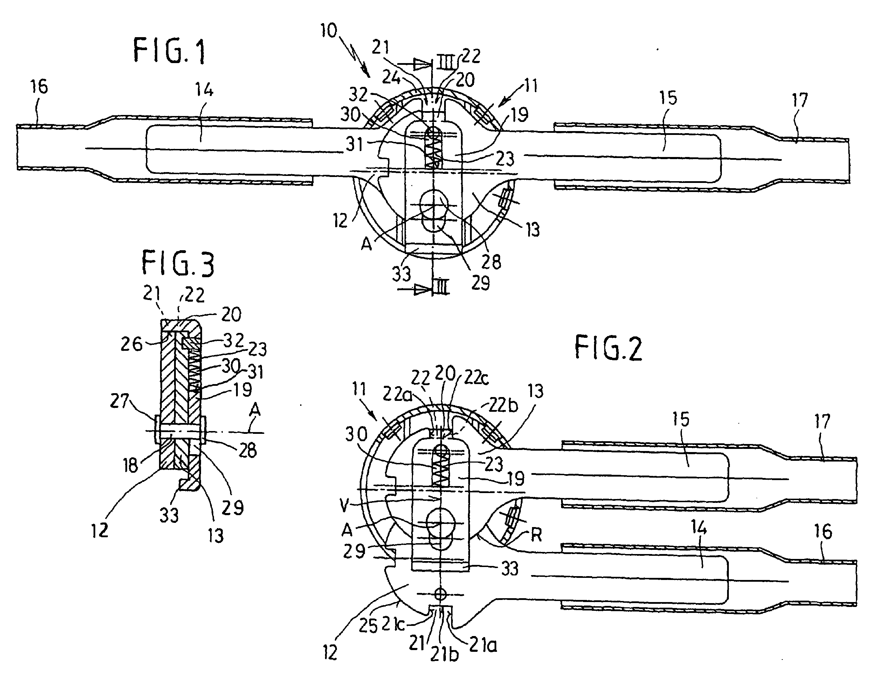

Fig. 1 zeigt eine in ihrer Gesamtheit mit 10 bezeichnete Haltestange in auseinandergefalteter Position. Dargestellt ist im wesentlichen nur der Bereich einer Gelenkverbindung 11, sowie an die Gelenkscheiben 12, 13 nach außen anschließende Haltestangenansätze 14, 15 und Haltestangenverlängerungen 16, 17. Die Haltestangenverlängerungen 16, 17 erstrecken sich im Prinzip über die gesamte Breite des Fahrzeugs, insbesondere Kraftfahrzeugs, und weisen an ihren Enden nicht dargestellte Befestigungsenden zur Einhängung in karosserieseitige Einhängetaschen auf.

Die dargestellte Haltestange 10 kann entweder eine obere Haltestange oder eine untere Haltestange für ein nicht dargestelltes Sicherheitsnetz ausbilden. Das Sicherheitsnetz kann beispielsweise derart an der Haltestange 10 befestigt sein, daß es unter Ausbildung einer Schlaufe um die Haltestange 10 herum geführt ist, wobei beispielsweise der Bereich der Gelenkverbindung 11 von der Schlaufenbildung ausgespart ist.

Die Gelenkverbindung 11 umfaßt im wesentlichen zwei Gelenkscheiben 12 und 13. Diese Gelenkscheiben sind um eine gemeinsame Schwenkachse A zwischen einer zusammengeklappten Position und einer auseinandergeklappten Position, der sogenannten Gebrauchsstellung (Fig. 1), verschwenkbar. Die Schwenkachse wird von einem Bolzen 18 (Fig. 3) gebildet, der die beiden Gelenkscheiben 12, 13 axial durchsetzt und mit entsprechenden Halteelementen 27, 28 versehen ist, die eine Unverlierbarkeit des Bolzens 18 relativ zu den beiden Gelenkscheiben 12, 13 gewährleisten.

Die Gelenkscheiben 12, 13 sind im wesentlichen als Kreisscheiben ausgebildet. An der bezüglich Fig. 1 vorderen Gelenkscheibe 13 ist ein verschiebbarer Körper 19 angeordnet. Dieser weist zwei Ausnehmungen 29, 30 auf, wobei die bezüglich Fig.1 untere Ausnehmung 29 langlochförmig ausgebildet ist, und von dem Bolzen 18, der die Schwenkachse A ausbildet, durchgriffen wird. Das Langloch 29 gewährleistet einen gewissen Verschiebeweg des beweglichen Körpers 19 relativ zu der Gelenkscheibe 13.

In der bezüglich Fig. 1 oberen Ausnehmung 30 ist ein Federelement (23) angeordnet, welches sich einerseits an einem Anschlag 31 des verschiebbaren Körpers (19) abstützt, und mit seinem anderen Ende an einem Befestigungsbolzen 32 anliegt, welcher fest relativ zu der zweiten Gelenkscheibe 13 angeordnet ist.

Das Federelement 23 ist als Druckfeder ausgebildet und sorgt dafür, daß der verschiebbare Körper 19 ständig in eine Position hineinbelastet wird, in der der verschiebbare Körper 19 bezüglich Fig. 1 maximal nach unten gedrängt wird.

Wie sich am besten aus Fig. 3 ersehen läßt, weist der verschiebbare Körper 19 einen oberen Abschnitt auf, der als Riegelelement 20 ausgebildet ist. Wie sich am besten aus Fig.1 ersehen läßt, liegt bei in ausgefalteter Position befindlicher Haltesstange 10 dieses Riegelelement 20 sowohl innerhalb einer Randausnehmung 21 der ersten Gelenkscheibe 12 wie auch in einer zweiten Randausnehmung 22 der zweiten Gelenkscheibe 13. Beide Randausnehmungen 21, 22 befinden sich bei in ausgefalteter Position befindlicher Haltestange gemäß Fig. 1 in Flucht. Auf diese Weise kann das Riegelelement 20 zugleich in beiden Randausnehmungen 21, 22 sitzen.

Jede Randausnehmung 21, 22 umfaßt einen Ausnehmungsboden 21b, 22b, sowie Ausnehmungsseitenwände 21a, 21c, 22a, 22c. Die Ausnehmungsböden 21b, 22b dienen als Anschlagfläche für die Auflagefläche 26 des Riegelelementes 20 (Fig. 3). Die Seitenwände 21c, 21 a, 22c, 22a gewährleisten einen Kraftschluß zwischen der ersten und zweiten Gelenkscheibe 12, 13 derart, daß die in ausgefalteter Position befindliche Haltestange 10 nicht zusammenfaltbar ist.

Wie sich aus Fig. 3 weiter entnehmen läßt, weist der verschiebbare Körper 19 außerdem einen Betätigungsabschnitt 33 auf. Dieser kann verhältnismäßig großflächig, und auf diese Weise von einem Benutzer leicht greifbar sein. Da der Betätigungsabschnitt 33 über den Rand R, der zweiten Gelenkscheibe 13 hinaus deutlich vorsteht, ist der Betätigungsabschnitt 33 besonders leicht zu bedienen.

Ausgehend von einer Haltestange 10 in zusammengefalteter Position gemäß Fig. 2 werden die beiden Haltestangenansätze 14, 15 bzw. Haltestangenverlängerung 16, 17 in die auseinandergefaltete Position gebracht. Dabei stößt im Verlauf dieser Schwenkbewegung eine Steuerfläche 25 auf den in Ruheposition befindlichen verschiebbaren Körper 19 derart, daß die Steuerfläche 25 mit der Auflagefläche 26 des Riegelelementes 20 in Kontakt kommt, und den verschiebbaren Körper 19 entgegen der Spannkraft des Federelementes 23 bezüglich Fig. 2 nach oben verlagert. Es handelt sich somit um eine Verschiebebewegung entlang der Achse V. Sobald die beiden Randausnehmungen 21, 22 der beiden Gelenkscheiben 12, 13 in Flucht geraten, findet das Riegelelement 20 Bewegungsraum und kann in seine Ruheposition auf Grund der Federkraft des Federelementes 23 zurückverstellt werden. In dieser Position ist die Haltestange 10 sicher arretiert.

Das in den Fig. 1 und 2 dargestellte Abdeckelement 24 trägt zu einem ästhetischen Gesamteindruck bei. Es wurde der Übersichtlichkeit halber bei der Darstellung der Fig. 3 weggelassen.

## Patentansprüche

1. Sicherheitsnetz zur lösbaren Anbringung in einem Fahrzeug, insbesondere in einem KFZ, mit wenigstens einer Haltestange (10), insbesondere einer unteren und einer oberen Haltestange, für das Sicherheitsnetz, die fahrzeugseitig befestigt, insbesondere eingehängt wird, wobei die Haltestange (10) mittels einer zwei um eine gemeinsame Achse (A) gegeneinander verschwenkbare Teile (12, 13) umfassenden Gelenkverbindung (11) faltbar ausgebildet ist, **dadurch gekennzeichnet, daß** ein peripher in wenigstens einem der beiden verschwenkbaren Teile (12, 13) eingreifendes Riegelelement (20) zur Arretierung der verschwenkbaren Teile (12, 13) relativ zueinander vorgesehen ist.

2. Vorrichtung nach Anspruch 1, **dadurch gekennzeichnet, daß** das Riegelelement (20) in Randausnehmungen (21, 22) der verschwenkbaren Teile (12, 13) eingreift.

3. Vorrichtung nach Anspruch 1, **dadurch gekennzeichnet, daß** bei in ausgefalteter Position befindlicher Haltestange (10) das Riegelelement (20) in zwei fluchtende Randausnehmungen (21, 22) der beiden verschwenkbaren Teile (12, 13) eingreift.

4. Vorrichtung nach Anspruch 1, **dadurch gekennzeichnet, daß** das Riegelelement (20) radial in Randausnehmungen (21, 22) an wenigstens einem der beiden verchwenkbaren Teile (12, 13) eingreift.

5. Vorrichtung nach einem der vorangegangenen Ansprüche, **dadurch gekennzeichnet, daß** die beiden verschwenkbaren Teile (12, 13) im wesentlichen als Scheibengelenkteile ausgebildet sind.

6. Vorrichtung nach einem der vorangegangenen Ansprüche, **dadurch gekennzeichnet, daß** das Riegelelement (20) Bestandteil eines radial verschiebbaren Körpers (19) ist.

7. Vorrichtung nach Anspruch 6, **dadurch gekennzeichnet, daß** der radial verschiebbare Körper (19) in eine Ruheposition hin federbelastet ist.

8. Vorrichtung nach Anspruch 6 order 7, **dadurch gekennzeichnet, daß** der radial verschiebbare Korper (19) einen Betätigungsabschnitt (33) zur manuellen Betätigung aufweist.

9. Vorrichtung nach einem der vorangegangenen Ansprüche, **dadurch gekennzeichnet, daß** das Riegelelement (20) entlang einer Geraden (V) bewegbar ist, die im wesentlichen senkrecht zu der Schwenkachse (A) der beiden Teile steht.

## Claims

1. A security net for detachable mounting in a vehicle, especially a motor vehicle, having at least one retaining rail (10), especially a lower and an upper retaining rail, for the security net, which rail is secured to, especially hooked into, the vehicle, the retaining rail (10) being in the form of a collapsible construction by means of a hinge joint (11) comprising two parts (12, 13) pivotable with respect to one another about a common axis (A), **characterised in that** there is provided a locking bolt element (20) engaging peripherally in at least one of the two pivotable parts (12, 13) for locking the pivotable parts (12, 13) relative to one another.

2. A device according to claim 1, **characterised in that** the locking bolt element (20) engages in edge recesses (21, 22) of the pivotable parts (12, 13).

3. A device according to claim 1, **characterised in that** when the retaining rail (10) is located in the folded-out position, the locking bolt element (20) engages in two aligned edge recesses (21, 22) of the two pivotable parts (12, 13).

4. A device according to claim 1, **characterised in that** the locking bolt element (20) engages radially in edge recesses (21, 22) on at least one of the two pivotable parts (12, 13).

5. A device according to any one of the preceding claims, **characterised in that** the two pivotable parts (12, 13) are substantially in the form of disc-type joint parts.

6. A device according to any one of the preceding claims, **characterised in that** the locking bolt element (20) is a component of a radially displaceable body (19).

7. A device according to claim 6, **characterised in that** the radially displaceable body (19) is spring-loaded towards a position of rest.

8. A device according to claim 6 or 7, **characterised in that** the radially displaceable body (19) has an operating portion (33) for manual operation.

9. A device according to any one of the preceding claims, **characterised in that** the locking bolt element (20) is movable along a straight line (V) that is substantially perpendicular to the axis of rotation (A) of the two parts.

## Revendications

1. Filet de sécurité destiné à être placé de façon détachable sur un véhicule, en particulier sur un véhicule automobile, comprenant au moins une barre de retenue (10), en particulier une barre de retenue inférieure et une barre de retenue supérieure, pour le filet de sécurité, qui est fixé, en particulier accroché côté véhicule, la barre de retenue (10) étant réalisée de façon pliable au moyen d'une liaison d'articulation (11) comprenant deux parties (12, 13) basculant l'une par rapport à l'autre autour d'un axe (A) commun, **caractérisé en ce qu'**un élément de verrou (20) s'engageant de façon périphérique dans au moins l'une des deux parties (12, 13) pivotantes pour le blocage des parties (12, 13) pivotantes l'une par rapport à l' autre .

2. Dispositif selon la revendication 1, **caractérisé en ce que** l'élément de verrou (20) s'engage dans des évidements de bordure (21, 22) des parties (12, 13) pivotantes.

3. Dispositif selon la revendication 1, **caractérisé en ce que** l'élément de verrou (20) s'engage dans deux évidements de bordure (21, 22) alignés des deux parties (12, 13) pivotantes lorsque la barre de retenue (10) se trouve dans une position dépliée.

4. Dispositif selon la revendication 1, **caractérisé en ce que** l'élément de verrou (20) s'engage radialement dans des évidements de bordure (21, 22) sur au moins l'une des deux parties (12, 13) pivotantes.

5. Dispositif selon l'une quelconque des revendications précédentes, **caractérisé en ce que** les deux parties (12, 13) pivotantes sont réalisées essentiellement sous la forme de parties articulées à disques.

6. Dispositif selon l'une quelconque des revendications précédentes, **caractérisé en ce que** l'élément de verrou (20) est un élément constituant d'un corps (19) pouvant coulisser radialement.

7. Dispositif selon la revendication 6, **caractérisé en ce que** le corps (19) coulissant radialement est sollicité par un ressort en direction d'une position de repos.

8. Dispositif selon la revendication 6 ou 7, **caractérisé en ce que** le corps (19) coulissant radialement présente une partie d'actionnement (33) pour l'actionnement manuel.

9. Dispositif selon l'une quelconque des revendications précédentes, **caractérisé en ce que** l'élément de verrou (20) est mobile le long d'une droite (V) qui est sensiblement perpendiculaire à l'axe de pivotement (A) des deux parties.
